(19) Europäisches Patentamt
European Patent Office
Office européen des brevets

(11) **EP 1 370 806 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(21) Anmeldenummer: **02727462.0**

(22) Anmeldetag: **22.03.2002**

(51) Int Cl.:
*F23N 1/02* (2006.01)     *F23N 5/18* (2006.01)
*F23D 14/60* (2006.01)

(86) Internationale Anmeldenummer:
**PCT/EP2002/003253**

(87) Internationale Veröffentlichungsnummer:
**WO 2002/077528 (03.10.2002 Gazette 2002/40)**

(54) **VERFAHREN UND VORRICHTUNG ZUR EINSTELLUNG DER LUFTZAHL**

METHOD AND DEVICE FOR ADJUSTING AIR/FUEL RATIO

PROCEDE ET DISPOSITIF DE REGLAGE DU RAPPORT AIR/CARBURANT

(84) Benannte Vertragsstaaten:
**AT BE CH CY DE DK ES FI FR GB GR IE IT LI LU MC NL PT SE TR**

(30) Priorität: **23.03.2001 DE 10114405**
**26.03.2001 DE 10114901**

(43) Veröffentlichungstag der Anmeldung:
**17.12.2003 Patentblatt 2003/51**

(73) Patentinhaber: **GVP Gesellschaft zur Vermarktung der Porenbrennertechnik mbH**
**91058 Erlangen (DE)**

(72) Erfinder: **GOEBEL, Peter**
**35066 Frankenberg (DE)**

(74) Vertreter: **Gassner, Wolfgang et al**
**Dr. Gassner & Partner**
**Patentanwälte**
**Marie-Curie-Strasse 1**
**91052 Erlangen (DE)**

(56) Entgegenhaltungen:
**EP-A- 0 075 369     EP-A- 1 002 997**
**US-A- 5 401 162     US-A- 5 486 107**

**Beschreibung**

Die Erfindung betrifft ein Verfahren und eine Vorrichtung zur Einstellung der Luftzahl λ eines aus einem gasförmigen Brennstoff und Luft hergestellten Brennstoff/Luftgemischs zum Betreiben eines Brenners.

Aus der DE 29 28 739 B1 ist ein Verfahren bekannt, bei dem ein Teilstrom von brennbarem Gas abgezweigt und über einen Laminarwiderstand geleitet wird. Es wird der Druckabfall über dem Laminarwiderstand bei konstanter Temperatur oder mit geeigneter Temperaturkompensierung gemessen. Aus dem gemessenen Druckabfall bzw. der Viskosität des Gases kann auf den Wobbe-Index bzw. die Wobbezahl und damit auf den Heiz- sowie Brennwert des Gases geschlossen werden.

Aus der WO 2000/065280 bzw. DE 199 18 901 CI ist eine Vorrichtung zur Einstellung des Oxidationsmittel/ Brennstoffgemischs in der Zuleitung eines Brenners bekannt. Dabei wird die Viskosität des Oxidationsmittel/ Brennstoffgemischs gemessen und in Abhänigkeit des ermittelten Messwerts die Zusammensetzung des Oxidationsmittel/ Brennstoffgemischs eingestellt. Zur Messung des Viskosität wird u.a. der Volumenstrom, die Temperatur und der Druck des Brennstoffs gemessen. Die Ermittlung der Viskosität hängt bei dem vorgeschlagenen Verfahren von vielen Parametern ab. Infolge von Messfehlern bei der Messung der einzelnen Parameter kommt es mitunter zu einer ungenauen Bestimmung der Viskosität. Infolge dessen ist auch die Einstellung des Oxidationsmittel/Brennstoffgemischs nicht immer optimal.

Aus der DE 43 36 174 ist es bekannt, zur Messung und/oder Regelung der Wärmemengenzufuhr zu Gasverbrauchseinrichtungtin einen Volumenstrom eines Brenngases zu messen. Außerdem werden die Schallgeschwindigkeit und die Dichte des Gases unter Normbedingungen sowie die Schallgeschwindigkeit unter Betriebsbedingungen gemessen. Aus den vorgenannten Parametern wird die Wärmemengenzufuhr zur Gasverbrauchseinrichtung ermittelt.

Mit der bekannten Vorrichtung können über das Gasnetz eingetragene Druckschwankungen nicht erfasst werden. Es ist das Vorsehen eines vorgeschalteten Druckreglers erforderlich. Die bekannte Vorrichtung ist nicht besonders universell, weil damit das Gas/Luftgemisch lediglich auf einen vorgegebenen Wert optimiert wird. Es wird insbesondere nicht berücksichtigt, dass ein Brenner je nach wahl einer vorgegebenen Betriebsart u.U. mit unterschiedlichen Gas/Luftgemischen zu betrieben ist.

Aus der US 5,486,107 A sowie der US 5,401,162 A sind Verfahren zur Einstellung der Luftzahl in einem Brennstoff/Luftgemisch bekannt. Dabei werden zur Einstellung der Luftzahl Parameter wie die Dichte eines brennbaren Gases oder dessen spezifische Wärme gemessen.

Die EP 0 819 855 A1 offenbart ein Verfahren sowie eine Vorrichtung zur Einstellung der Luftzahl nach dem Oberbegriff der Ansprüche 1 und 9.

Aufgabe der Erfindung ist es, ein universelles Verfahren und eine universelle Vorrichtung zur Einstellung der Luftzahl eines Brennstoff/Luftgemischs anzugeben.

Diese Aufgabe wird durch die Merkmale der Anspruche 1 und 9 gelöst. Zweckmäßige Ausgestaltungen der Erfindung ergeben sich aus den Merkmalen der Ansprüche 2 bis 8 und 10 bis 14.

Das vorgeschlagene Verfahren ist besonders universell. Die erfindungsgemäß vorgesehene Messung des Massenstroms des Brennstoffs ermöglicht es, Druckschwankungen im Gasnetz zu erkennen. Solche Druckschwankungen können unter Anwendurg des erfindungsgemäßen Verfahrens regelungstechnisch kompensiert werden. Das Vorsehen eines Druckreglers ist nicht mehr erforderlich. Der Massenstrom bzw. Massedurchfluss ist gegeben durch

$$q_m = dm/dt.$$

Der Massenstrom bzw. Massedurchfluss ist in einem geschlossenen System konstant. Bei kompresiblen Fluiden ist der Massefluss im Gegensatz zum Volumenfluss nicht von der Dichte und somit auch nicht vom Druck und der Temperatur abhänig.

Die Messung des Massenstromes der Luft ermöglicht es, die Luftzahl gemäß den technischen Anforderungen des jeweils verwendeten Brennertyps anzupassen. Ferner kann die Luftzahl an die jeweilige Betriebsart des Brenners, z.B. den Zündvorgang oder dgl., nach vorgegebenen Werten eingestellt werden. Das vorgeschlagene Verfahren erlaubt jederzeit einen stabilen und sicheren Betrieb unterschiedlichster Brenner, selbst bei Druckschwankungen im Gasnetz oder sich ändernden Gaszusammensetzungen.

Gerade sich ändernde Gaszusammensetzungen haben es nach dem Stand der Technik erforderlich gemacht, Brenner so auszulegen, dass sie in einem relativ breiten Luftzahl-Bereich einwandfrei funktionieren. Derartige Brenner sind gleichzeitig mit dem Nachteil behaftet, dass die Verbrennung nicht optimal ist. Unerwünschte Emissionen sind die Folge. Das erfindungsgemäße Verfahren erlaubt nun den Einsatz von Brennern, die auf einen relativ engen Luftzahl-Bereich optimiert sind. Solche Brenner können mit niedrigen Emissionswerten betrieben werden.

Vorteilhafterweise erfolgt die Steuerung des Massenstromes der Luft beim Schritt lit. d in Abhängigkeit der Messwerte, d.h. des ersten, zweiten und dritten Messwerts. Die Steuerung ist dann besonders genau. Der Massenstrom der Luft kann mittels eines Gebläses gesteuert werden. Je höher die Drehzahl des Gebläses ist, desto höher ist der Anteil an dem Brennstoff/Luftgemisch zugesetzter Luft. Durch eine Erhöhung der Drehzahl des Gebläses kann die Luftzah $\lambda$ erhöht werden, wenn gleichzeitig der pro Zeiteinheit zugeführte Brennwert des Brennstoffs im Wesentlichen konstant gehalten wird.

Nach einer vorteilhaften Ausgestaltung werden die Messwerte an eine Datenverarbeitungseinrichtung übermittelt, gemäß einem vorgegebenen Algorithmus verarbeitet und mittels der Datenverarbeitungseinrichtung der Massenstrom des Brennstoffs mit einem in den Brennstoffstrom eingeschalteten Dosierventil geregelt. Der Massenstrom der Luft kann mittels eines Gebläses, einer Luftklappe und/oder eines zweiten Dosierventils gesteuert werden. Bei der Datenverarbeitungseinrichtung kann es sich um eine herkömmliche mit einem Mikroprozessor versehene Auswerte- und Steuerelektronik handeln. Das/die Dosierventil/e ist/sind zweckmäßigerweise pneumatisch oder mittels eines elektrischen Stellantriebs regelbar.

Nach einem weiteren Ausgestaltungsmerkmal kann die Luftzahl $\lambda$ in Abhängigkeit der Stabilität einer im Brenner erzeugten Flamme geregelt werden. Dazu kann im Brenner z.B. ein lichtempfindlicher Widerstand oder dgl. vorgesehen sein. Davon können vierte Messwerte an die Datenverarbeitungseinrichtung übermittelt werden. Auf der Grundlage der vierten Messwerte und der dritten Messwerte ist es möglich, das Gebläse, die Luftklappe und/oder das zweite Dosierventil nicht nur zu steuern, sondern auch zu regeln. Eine Regelung des Gebläses, der Luftklappe und/oder des zweiten Dosierventils kann auch in Abhängigkeit einer vorgegebenen Heizleistung des Brenners erfolgen. In diesem Fall werden die fünften Messwerte von einer Einrichtung zur Messung der Leistung des Brenners an die Datenverarbeitungseinrichtung übermittelt. Es ist ebenfalls möglich, die Luftzahl so zu regeln, dass die bei der Verbrennung gebildeten Emissionen minimal sind. In diesem Fall ist im Brenner z.B. eine $\lambda$-Sonde vorgesehen, welche sechste Messwerte an die Datenverarbeitungseinrichtung übermittelt.

Die Messung der Viskosität des Brennstoffs ermöglicht eine sofortige Erkennung einer Änderung der Zusammensetzung des Gases. Eine damit einhergehende Änderung des Wobbe-Index bzw. der Wobbezahl bzw. des Heiz- oder Brennwerts des Brennstoffs kann ebenfalls regelungstechnisch kompensiert werden.

Zur Messung der Viskosität kann ein Teilstrom aus dem Brennstoffstrom abgezweigt werden. Der Teilstrom wird mittels einer Mikropumpe mit konstantem Volumenstrom V durch eine Kapillare gepumpt. Dabei wird die Temperatur der Kapillare und der Druckabfall über der Kapillare gemessen. Aus diesen Messwerten und einer Apparatekonstante kann die dynamische Viskosität bestimmt werden, die sich im Fall einer hier gegebenen laminaren Strömung nach der Hagen-Poiseuille'schen Gleichung berechnet.

Es ist auch möglich, die dynamische Viskosität des gasförmigen Brennstoffs diskontinuierlich zu messen Dazu wird aus dem Brennstoffstrom eine Gasprobe entnommen und einer Kolbenpumpe zugeführt. Ein Kolben der Kolbenpumpe wird mit einer konstanten Geschwindigkeit bewegt und verdrängt dabei das Volumen durch die Kapillare. Nach einer ersten Variante wird für eine bestimmte Zeit t ein konstanter Volumenstrom V eingestellt und die Druckdifferenz $\Delta p$ über die Kapillare gemessen. Die Messung kann entweder nur auf dem Hin- oder Rückweg durchgeführt werden, oder sowohl auf dem Hin- als auch auf dem Rückweg. Nach einer zweiten Variante steigt die Geschwindigkeit des Kolbens stetig an, bis die Druckdifferenz einen bestimmten Wert erreicht hat, bei dem ein Messfehler eines Drucksensors besonders gering ist. Zu diesem Zeitpunkt wird die Geschwindigkeit bestimmt und dynamische Viskosität ermittelt.

Eine weitere Möglichkeit der Bestimmung der dynamischen Viskosität besteht darin, mittels einer Mikropumpe den Druck in einer Kammer auf einen vorgegebenen Druck $p_0$ zu erhöhen. Anschließend wird ein zwischen der Kapillare und der Kammer vorgesehenes Ventil geöffnet und der Druck der Kammer über die Kapillare entspannt, solange bis der Druck gleich dem Druck im Hauptstrom des Brennstoffs ist. Aus der Geschwindigkeit der Druckabnahme über der Kapillare kann auf die dynamische Viskosität geschlossen werden.

Hinsichtlich der Grundlagen des Zusammenhangs zwischen der Viskosität von Gasen und dem Wobbe-Index bzw. der Wobbezahl, dem Heiz- und Brennwert wird insbesondere auf die DE 29 28 739 B1 und die WO 2000/065280 verwiesen. Die Luftzahl $\lambda$ ist durch die folgende Beziehung gegeben:

$$\lambda = \frac{L}{L_{Min}} ,$$

wobei L die aus der Verbrennungsrechnung sich ergebende tatsächliche Verbrennungsluftmenge und $L_{Min}$ der Mindestluftbedarf ist.

Nach weiterer Maßgabe der Erfindung ist eine Vorrichtung zur Durchführung des erfindungsgemäßen Verfahrens mit dem Merkmalen des Anspruchs 9 vorgesehen.

Bei den verwendeten Massenstromsensoren kann es sich um herkömmliche Massenstromsensoren handeln. Geeignet sind z.E. Hitzdrahtsensoren, Karmanvortex-Sensoren und dgl.. Bei der Einrichtung zur Messung der Viskosität des Brennstoffs kann es sich ebenfalls um eine herkömmliche Einrichtung handeln, wie sie z.B. aus der DE 29 28 739 oder der WO 2000/065280 bekannt sind. Auch bei dem Dosierventil kann es sich um ein nach dem Stand der Technik übliches Dosierventil handeln, welches zweckmäßigerweise pneumatisch oder elektrisch regelbar ist.

Unter dem Begriff "Brennstoff-Zuführleitung" kann erfindungsgemäß auch ein von einer Haupt-Brennstoffleitung abzweigender Bypass verstanden werden. Insbesondere ist es möglich, die Einrichtung zur Messung des zweiten Messwerts der Viskosität oder einer Funktion derselben in einen solchen Bypass einzuschalten. Auch der Begriff "Luft-Zuführleitung" kann erfindungsgemäß im Sinne eines Bypasses einer Luft-Hauptstromleitung verstanden werden. Der zweite Massenstromsensor kann auch hier in diesen Bypass eingeschaltet sein.

Vorteilhafterweise kann mittels der Datenverarbeitungseinrichtung der Massenstrom der Luft in Abhängigkeit der Messwerte, d.h. des ersten, zweiten und dritten Messwerts, steuerbar sein. Die damit erreichte Steuerung ist besonders exakt. Der Massenstrom der Luft kann insbesondere mittels der Leistung eines Gebläses, der Stellung einer Luftklappe oder eines weiteren Dosierventils gesteuert werden.

Hinsichtlich der weiteren vorteilhaften Ausgestaltungen wird auf die vorangegangenen Ausführungen verwiesen, welche auch vorrichtungsseitig sinngemäß anwendbar sind.

Nachfolgend werden Ausführungobeispiele der Erfindung anhand der Zeichnungen näher erläutert. Es zeigen

Fig.1    ein Blockschaltbild einer erfindungsgemäßen Vorrichtung,

Fig.2    die Luftzahl λ aufgetragen über der Leistung eines Brenners,

Fig.3    die Luftzahl λ aufgetragen über der Zeit für verschiedene Betriebsbedingungen,

Fig.4a bis c    schematische Bestandteile einer erfindungsge- mäßen Steuer- und Regelvorrichtung,

Fig. 5    eine schematische Ansicht einer ersten Ein- richtung zur Messung der Viskosität von Gas,

Fig. 6    eine schematische Ansicht einer zweiten Ein- richtung zur Messung der Viskosität von Gas und

Fig. 7    eine schematische Ansicht einer dritten Ein- richtung zur Messung der Viskosität von Gas.

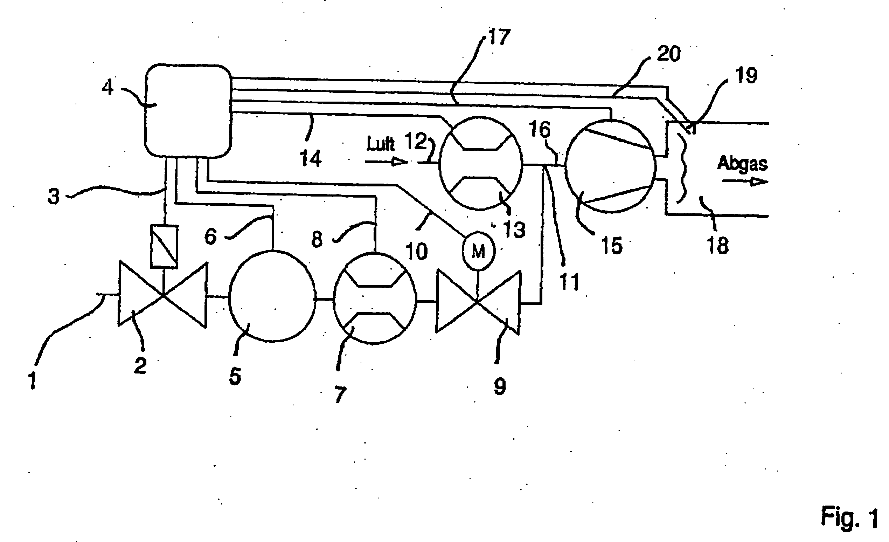

In Fig.1 ist in eine für gasförmigen Brennstoff bzw. Gas geeignete Zuführleitung 1 ein Sicherheits-Magnetventil bzw. Absperrventil 2 eingeschaltet. Das Absperrventil 2 ist über eine erste Steuerleitung 3 mit einer Datenverarbeitungseinrichtung 4 verbunden. Dabei kann es sich um eine Auswerte- und Steuerelektronik handeln, welche mit einem Mikroprozessor und einen fest eingespeicherten Algorithmus zur Auswertung von Messdaten sowie zur Steuerung ausgestattet ist. Eine stromabwärts dem Absperrventil 2 nachgeschaltete Einrichtung 5 zur Messung der Viskosität des Gases weist z.B. als Strömungswiderstand eine Kapillare (hier nicht gezeigt) auf, durch welche ein vom Gasstrom abgezweigter Teilstrom mit laminarer Strömung geführt ist. Ein Druckabfall über der Kapillare wird mittels einer geeigneten Druckmesseinrichtung (ebenfalls nicht gezeigt) gemessen. Aus dem gemessenen Druckabfall kann auf den Wobbe-Index bzw. die Wobbezahl, den Brenn- und Heizwert des Gases geschlossen werden. Die Druckmesseinrichtung ist über eine erste Messleitung 6 mit der Datenverarbeitungseinrichtung 4 verbunden. Der Einrichtung 5 zur Messung der Viskosität des Gases ist ein erster Massenstromsensor 7 nachgeordnet. Dabei kann es sich z.B. um einen herkömmlichen Hitzdrahtsensor handeln. Hitzdrahtsensoren messen den Massenstrom des Gases auf der Grundlage der Flugzeit eines dem Gasstrom aufgeprägten Wärmesignals. Der erste Massenstromsensor 7 ist über eine zweite Messleitung 8 mit der Datenverarbeitungseinrichtung 4 verbunden. Dem ersten Massenstromsensor 7 nachgeordnet ist ein erstes Dosierventil 9, dass mit einer zweiten Steuerleitung 10 mit der Datenverarbeitungseinrichtung 4 verbunden ist. Die Gas-Zuführleitung 1 mündet beim Verzweigungspunkt 11 in eine Luft-Zuführleitung 12. In die Luft-Zuführleitung 12 eingeschaltet ist ein zweiter Massenstromsensor 13, welcher mit einer dritten Messleitung mit der Datenverarbeitungseinrichtung 4 verbunden ist. Mit 15 ist ein Gebläse bezeichnet, welches stromabwärts des Verzweigunspunkts 11 in eine Gas/Luftge-mischleitung 16 eingeschaltet ist. Das Gebläse 15 ist über eine dritte Steuerleitung 17 mit der Datenverarbeitungseinrichtung 4 verbunden. Stromabwärts des Gebläses 15 befindet sich ein Brenner 18 mit einer Zündvorrichtung 20, welche über vierte Steuerleitungen 19 mit der Datenverarbeitungseinrichtung 4 verbunden ist.

Die Funktion der Vorrichtung ist folgende:

Die Gas-Zuführleitung 1 kann unmittelbar, d.h. ohne Zwischenschaltung eines Druckreglers, an das Gasnetz angeschlossen sein. Es kann zunächst eine Dichtigkeitsprüfung durchgeführt werden. Dazu wird das Absperrventil 2 geschlossen. Mittels des ersten Massenstromsensors 7 wird ermittelt, ob das Absperrventil 2 ordnungsgemäß dicht die Gas-Zuführleitung 1 absperrt. Sofern das der Fall ist, kann das Absperrventil 2 durch entsprechende Ansteuerung über die erste Steuerleitung 3 geöffnet werden. Auf der Strecke bis zum ersten Dosierventil 9 wird mittels der Einrichtung 5 die Viskosität und mit dem ersten Massenstromsensor 7 der Massenstrom des Gases gemessen. Die beiden Messwerte werden an die Datenverarbeitungseinrichtung 4 übermittelt und dort gemäß einem vorgegebenen Algorithmus ausgewertet. Dabei werden verschiedene vorgegebene Parameter, wie z.B. die Eigenschaften des Brenners 18, berücksichtigt. Die Verarbeitung der von der Einrichtung 5 und dem ersten Massenstromsensor 7 gelieferten Messergebnisse bewirkt Steuerimpulse, mit denen das erste Dosierventil 9 so gesteuert wird, dass am Verzweigungspunkt 11 ein Gasstrom mit einem konstanten Brennwert pro Zeiteinheit bereitgestellt wird. Bei dem ersten Dosierventil 9 kann es sich um ein Impuls-, Drehschieber- oder ein Piezo-Ventil handeln. Eine Abweichung der Viskosität oder des Massenstroms des Gases bewirkt eine sofortige Änderung des Querschnitts des ersten Dosierventils 9, so dass der vorgegebene Brennwert pro Zeiteinheit stets konstant gehalten wird. Es wird also jede Druckschwankung des Gasnetzes und jede Änderung der Gaszusammensetzung erkannt und in geeigneter Weise kompensiert.

Mittels des zweiten Massenstromsensors 13 wird der Massenstrom der Luft gemessen. Das Gas/Luftgemisch wird durch die Luftzahl λ bestimmt. Eine von der Datenverarbeitungseinrichtung 4 in Abhängigkeit vorgegebener Betriebszustände, z.B. Zündung des Brenners, wird durch eine geeignete Steuerung des Gebläses 15 eingestellt. Die vorgegebene Luftzahl λ korrespondiert bei Zufuhr eines Gases mit konstantem Brennwert pro Zeiteinheit zum Massenstrom der zugeführten Luft. Die Luftzahl λ ist also über den Massenstrom der Luft einstellbar.

Der Massenstrom der Luft kann z.B. über die Leistung des Gebläses, d.h. dessen Drehzahl, oder über ein dem Gebläse vor- oder nachgeschaltetes zweites Dosierventil oder einer Luftklappe (hier nicht gezeigt) gesteuert werden.

Es ist ferner möglich, die Luftzahl λ in Abhängigkeit weiterer Parameter zu regeln. So können im Bereich des Brenners 18 geeignete Sensoren zur Erfassung der Stabilität der Flamme, der Leistung des Brenners 18 oder der bei der Verbrennung erzeugten Emissionen vorgesehen sein. Derartige (hier nicht gezeigte) Sensoren können über (hier nicht gezeigte) vierte, fünfte oder sechste Messleitungen mit der Datenverarbeitungseinrichtung 4 verbunden sein. Die Luftzahl λ kann dann z.B. so geregelt werden, dass eine vorgegebene Stabilität der Flamme aufrechterhalten wird, eine bestimmte Leistung des Brenners 18 konstant gehalten wird oder Emissionswerte minimal gehalten werden.

Das vorbeschriebene Ausführungsbeispiel ist keineswegs so zu verstehen, dass die erwähnten Komponenten in der beschriebenen Reihenfolge angeordnet sein müssen. Es ist selbstverständlich möglich, die Einrichtung 5, den ersten Massenstromsensor 7 und das Dosierventil 9 auch in anderer Reihenfolge anzuordnen. Ferner ist es auch möglich den zweiten Massenstromsensor 13 und das Gebläse 14 in einer anderen Reihenfolge und Anordnung bezüglich des Punkts 11 anzuordnen.

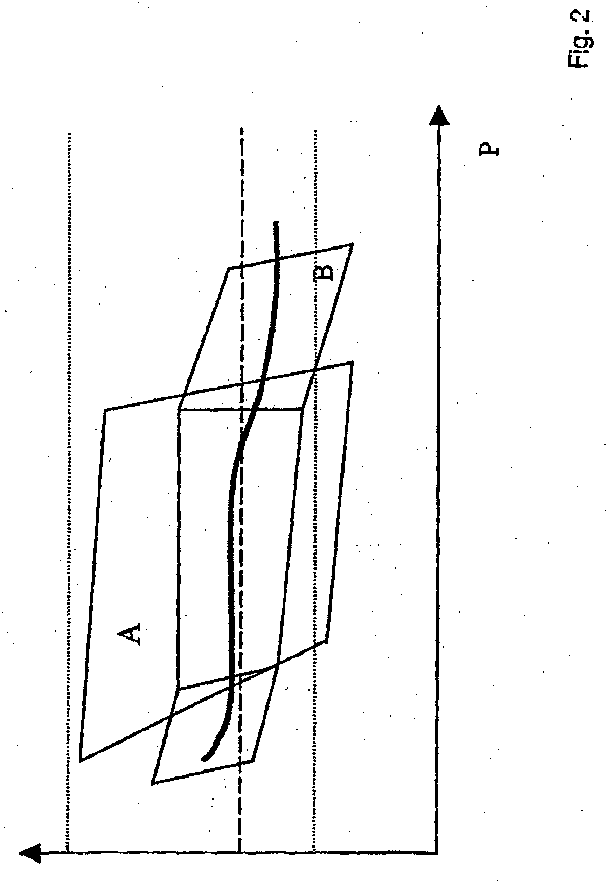

Fig.2 zeigt die Luftzahl λ aufgetragen über der Leistung P eines Brenners. Das mit A bezeichnete Betriebsfeld ist typisch für Brenner nach dem Stand der Technik. Solche Brenner müssen infolge der beim üblichen Betrieb auftretenden Änderungen der Gasarten einen sicheren Betrieb über einen relativ weiten Bereich an Luftzahlen λ gewährleisten. Der entsprechende Leistungsbereich P, die sogenannte Modulation, ist nicht besonders breit. Unter Verwendung des erfindungsgemäßen Verfahrens bzw. einer zur Durchführung dieses Verfahrens geeigneten Vorrichtung können Brenner eingesetzt werden, welche auf den Betrieb eines engen Bereichs von Luftzahlen λ eingestellt sind. Bei der Verwendung des erfindungsgemäßen Verfahrens erfolgt eine Änderung der Luftzahl λ innerhalb vorgegebener Grenzen. Eine zufällige, nicht erwünschte Änderung der Luftzahl λ ist ausgeschlossen. Brenner, welche hinsichtlich der Luftzahl λ auf einen relativ engen Betriebsbereich eingestellt sind, können mit niedrigen Emissionwerten betrieben werden. Sie weisen eine verbesserte Modulation auf. Das Betriebsfeld solcher Brenner ist mit B in Fig. 2 bezeichnet.

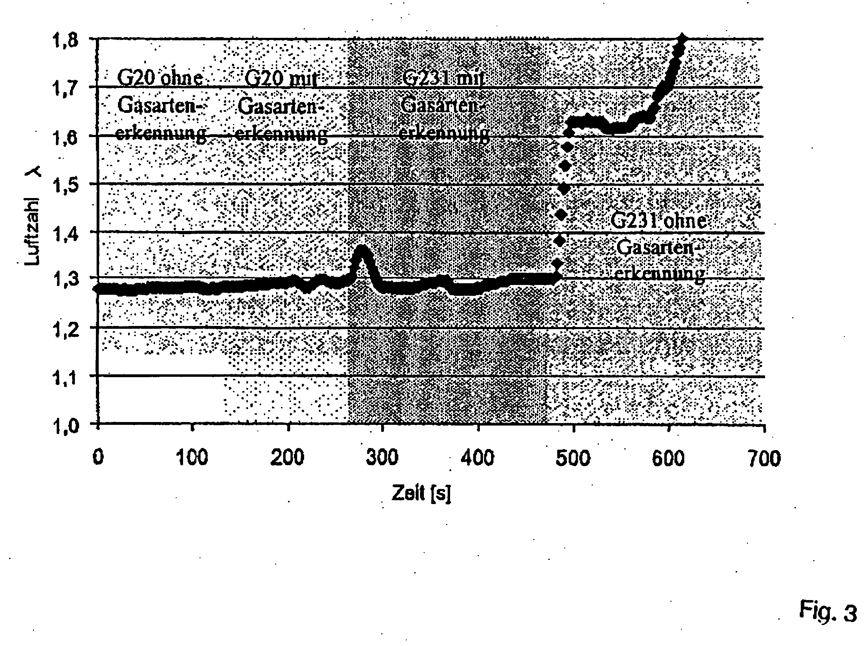

In Fig. 3 ist die Luftzahl λ über der Zeit aufgetragen. Es ist vergleichend ein Brenner gezeigt, welcher mit und ohne erfindungsgemäße Vorrichtung bei einem Wechsel der Gasart G 20 auf G 23 betrieben wird. Sofern die erfindungsgemäße Vorrichtung nicht vorgesehen ist, erhöht sich bei einem Wechsel auf die Gasart G 23 die Luftzahl λ derart, dass eine Flamme im Brenner erlischt.

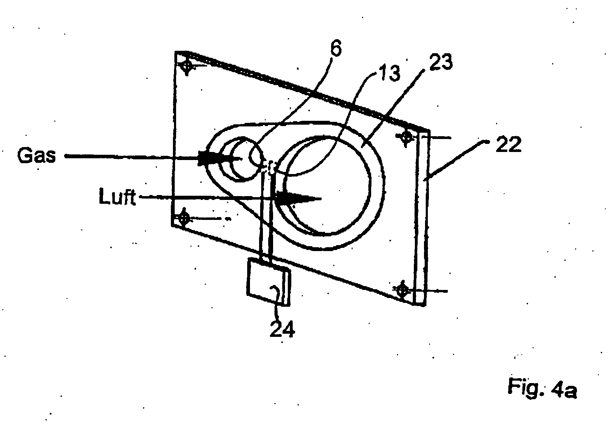

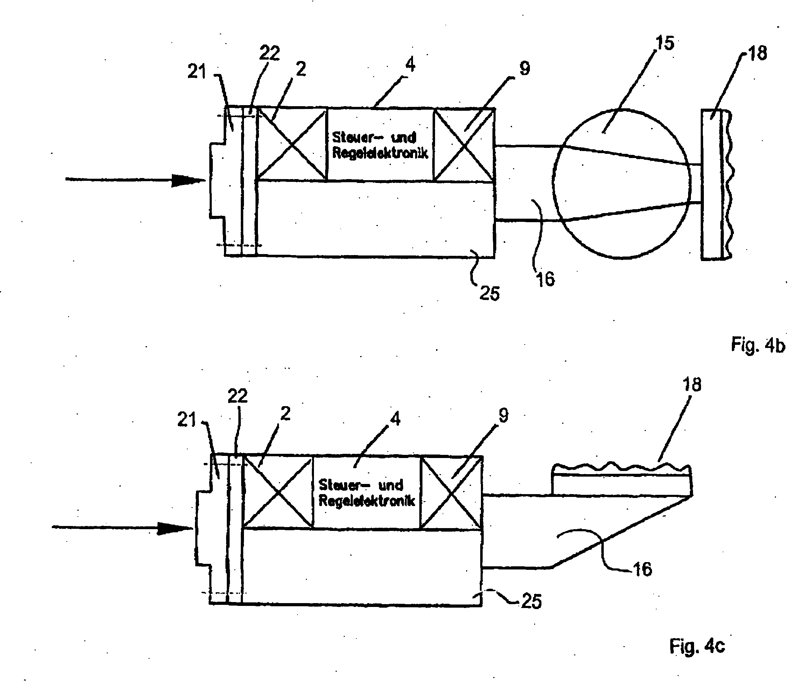

Die Fig. 4a bis c zeigen schematisch eine erfindungsgemäße Steuer- und Regelvorrichtung. Eine Einlassplatte 21 weist Anschlüsse für die Gas- und Luft-Zuführleitungen auf. Stromabwärts der Einlassplatte 21 befindet sich eine Zwischenplatte 22, welche in Fig. 4a genauer gezeigt ist. Die Zwischenplatte 22 ist mit Durchbrüchen versehen, durch welche separat der Gas- und Luftstrom geführt wird. Im Durchbruch für den Gasstrom ist der erste Massenstromsensor 6 und im Durchbruch für den Luftstrom der zweite Massenstromsensor 13 vorgesehen. Eine Dichtung ist mit 23 und eine mit dem ersten 6 und dem zweiten Massenstromsensor 13 verbundene Auswerteelektronik mit 24 bezeichnet. Die Zwischenplatte 22 ist gasdicht angebracht an einem die Datenverarbeitungseinrichtung 4 bzw. die Steuer- und Regelelektronik aufnehmenden Gehäuse 25. In dem Gehäuse 25 befindet sich das Sicherheits-Magnetventil 2, welches der Zwischenplatte 22 nachgeordnet und in den Gasstrom eingeschaltet ist. Stromabwärts davon angeordnet und wiederum in den Gasstrom eingeschaltet ist das Dosierventil 9. Eine (hier nicht gezeigte) Einrichtung 5 zur Messung der Viskosität des Gases kann zwischen dem Sicherheits-Magnetventil 2 und dem Dosierventil 9 angeordnet sein. Die Einrichtung 5 kann aber auch Bestandteil der Zwischenplatte 22 sein. Die in Fig. 4b gezeigte Vorrichtung ist geeignet für gebläseunterstützte Brenner 18. In eine vom Gehäuse 25 der Vorrichtung wegführende Gas/Luftgemischleitung 16 ist das Gebläse 15 eingeschaltet. Die Steuerung des Massenstroms der Luft erfolgt hier über eine Steuerung der Leistung des Gebläses 15.

Die in Fig. 4c gezeigte Vorrichtung ist zur Einstellung der Luftzahl eines atmosphärischen Brenners 18 geeignet. In diesem Fall ist in die Gas/Luftgemischleitung 16 kein Gebläse eingeschaltet. Zur Steuerung des Massenstroms der Luft ist im Gehäuse ein (hier nicht gezeigtes) weiteres Dosierventil aufgenommen, mit dem der Massenstrom der Luft steuerbar ist.

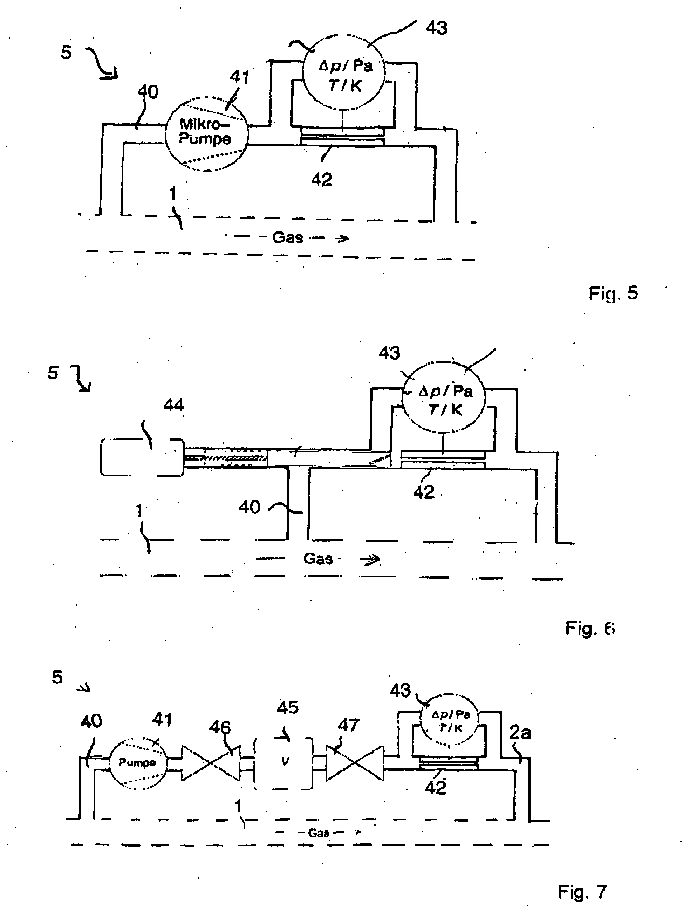

In den Fig. 5 bis 7 sind schematisch verschiedene Ausführungsbeispiele von Einrichtungen 5 zur Messung der Viskosität gezeigt.

Die in Fig. 5 gezeigte Einrichtung 5 ermöglicht eine kontinuierliche Messung der Viskosität des Gases. Von einer Gas-Zuführleitung 1 zweigt ein Bypass 40 ab. In den wieiteren Bypass 40 ist eine Mikropumpe 41 eingeschaltet. Stromabwärts ist eine Kapillare 42 vorgesehen sowie eine Druckmesseinrichtung 43. Mittels der Mikropumpe 41 wird ein konstanter Volumenstrom V durch die Kapillare 42 gepumpt Mittels der Druckmesseinrichtung wird der Druckabfall über der Kapillare 42 gemessen. Gleichzeitig wird die Temperatur der Kapillare bestimmt. Dazu kann die Druckmesseinrichtung 43 z.B. ein Thermoelement umfassen. Aus den gemessenen Werten kann nach der Hagen-Poiseuille'schen Gleichung die dynamische Viskosität des Gases bestimmt werden.

Die in Fig. 6 gezeigte Einrichtung 5 ermöglicht eine diskontinuierliche Messung der dynamischen Viskosität. In den 3y-pass 40 ist eine Kolbenpumpe 44 eingeschaltet. Eine über den Bypass 40 entnommene Gasprobe wird nach einer ersten Variante der Messung mittels der Kolbenpumpe 44 für eine bestimmte Zeit mit einem konstanten Volumenstrom durch die Kapillare 42 gedrückt. Es wird die Druckdifferenz über der Kapillare mittels der Druckmesseinrichtung 43 gemessen. Daraus kann wie bei der Vorrichtung Fig. 5 die dynamische Viskosität des Gases ermittelt werden. Nach einer zweiten Variante wird die Geschwindigkeit der Kolbenpumpe 44 erhöht, bis eine Druckdifferenz über der Kapillare 42 erreicht wird, bei welcher der Messfehler der Druckmesseinrichtung 43 besonders gering ist. Zu diesem Zeitpunkt wird die Vorschubgeschwindigkeit der Kolbenpumpe 44 bestimmt. Daraus wird dann die dynamische Viskosität des Gases ermittelt.

Bei der in Fig. 7 gezeigten weiteren Einrichtung 5 erfolgt die Messung der dynamischen Viskosität auf der Grundlage eines bekannten Volumens. Über den Bypass 40 wird eine Gasprobe entnommen und über die Mikropumpe 41 in eine Kammmer 45 gepumpt. Während des Befüllens der Kammer 45 ist ein erstes Ventil 46 geöffnet und ein zweites Ventil 47 geschlossen. Sobald die Kammer 45 gefüllt ist, wird auch das erste Ventil 46 geschlossen. Anschließend wird das zweite Ventil 47 geöffnet. Das Gas strömt durch die Kapillare 42, bis der Druck in der Kammer 45 gleich dem Druck in der Gas-Zuführleitung 1 ist. Mit der Druckmesseinrichtung 43 wird die Geschwindigkeit der Druckabnahme gemessen. Daraus kann die dynamische Viskosität ermittelt werden.

Bezugszeichenliste

1     Gas-Zuführleitung
2     Absperrventil
3     erste Steuerleitung
4     Datenverarbeitungseinrichtung
5     Einrichtung zur Messung der Viskosität
6     erste Messleitung
7     erster Massenstromsensor
8     zweite Messleitung
9     erstes Dosierventil
10     zweite Steuerleitung
11     Verzweigungspunkt
12     Luft-Zuführleitung
13     zweiter Massenstromsensor
14     dritte Messleitung
15     Gebläse
16     Gas/Luftgemischleitung
17     dritte Steuerleitung
18     Brenner
19     Zündeinrichtung
20     vierte Steuerleitung
21     Einlassplatte
22     Zwischenplatte
23     Dichtung
24     Auswerteelektronik
25     Gehäuse
40     Bypass
41     Mikropumpe
42     Kapillare
43     Druckmesseinrichtung
44     Kolbenpumpe
45     Kammer
46     erstes Ventil
47     zweites Ventil

**Patentansprüche**

1. Verfahren zur Einstellung der Luftzahl $\lambda$ eines aus einem gasförmigen Brennstoff und Luft hergestellten Brennstoff/Luftgemischs zum Betreiben eines Brenners (18), wobei

   a) als erster Messwert der Massenstrom des Brennstoffs ermittelt wird,
   b) als zweiter Messwert ein wert zur Ermittlung der Woobezahl des Brennstoffs bestimmt wird,
   c) als dritter Messwert ein Massenstrom der Luft ermittelt wird, und
   d) der Massenstrom der Luft und/oder des Brennstoffs in Abhängigkeit mindestens zweier der Messwerte so gesteuert wird, dass eine vorgegebene Luftzahl $\lambda$ des Brennstoff/Luftgendschs eingestellt wird,
   **dadurch gekennzeichnet, dass**
   als zweiter Messwert die Viskosität des Brennstoffs ermittelt wird.

2. Verfahren nach Anspruch 1, wobei die Steuerung des Massentroms der Luft beim Schritt litd in Abhängigkeit der Messwerte erfolgt.

**3.** Verfahren nach einem der vorhergehenden Ansprüche, wobei die Messwerte an eine Datenverarbeitungseinrichtung (4) übermittelt, gemäß einem vorgegebenen Algorithmus verarbeitet und mittels der Datenverarbeitungseinrichtung (4) der Massenstrom des Brennstoffs mit einem in den Brennstoffstrom eingeschalteten ersten Dosierventil (9, 38) geregelt wird.

**4.** Verfahren nach Anspruch 3, wobei der Massenstrom der Luft mittels eines Gebläses (15), einer Luftklappe und/oder eines zweiten Dosierventils gesteuert wird.

**5.** Verfahren nach einem der vorhergehenden Ansprüche, wobei die Luftzahl λ in Abhängigkeit der Stabilität einer im Brenner (18) erzeugten Flamme geregelt wird.

**6.** Verfahren nach einem der vorhergehenden Ansprüche, wobei die Luftzahl λ in Abhängigkeit einer vorgegebenen Heizleistung des Brenners (18) geregelt wird.

**7.** verfahren nach einem der vorhergehenden Ansprüche, wobei die Luftzahl λ so geregelt wird, dass die bei der Verbrennung gebildeten Emissionen minimal sind.

**8.** Verfahren nach einem der vorhergehenden Ansprüche, wobei ein Massenstrom des Brennstoffs auf der Grundlage des ersten und zweiten Messwerts so geregelt wird, dass ein vorgegebener Brennwert des pro Zeiteinheit zum Brenner (18) geförderten Brennstoffs im Wesentlichen konstant gehalten wird,

**9.** Vorrichtung zur Durchführung der Verfahrens nach einem der vorhergehenden Ansprüche, wobei in eine Brennstoff-Zuführleitung (1) ein erster Massestromsensor zur Ermittlung eines ersten Messwerts, eine Einrichtung (5) zur Messung eines zweiten Messwerts zur Ermittung der Wobbezahl und ein erstes Dosierventil (9) eingeschaltet sind, wobei in eine Luft-Zuführleitung (12, 28) ein zweiter Massenstromsensor (13) zur Ermittlung eines dritten Messwerts eingeschaltet ist, wobei ein Mittel (15) zur Steuerung des Massenstroms der Luft vorgesehen ist. wobei eine Datenverarbeitungseinrichtung (4) zur Regelung des Massenstroms des Brennstoffs mittels des ersten Dosierventils (9) vorgesehen ist, wobei der Massenstrom des Brennstoffs in Abhängigkeit des ersten und zweiten Messwerts so regelbar ist, dass ein vorgegebener Brennwert des pro Zeiteinheit zum Brenner (18) geförderten Brennstoffs im Wesentlichen konstant gehalten wird, und wobei mittels der Datenverarbeitungseinrichtung (4) der Massenstrom der Luft in Abhängigkeit mindestens zweier der Messwerte so steuerbar ist, dass eine vorgegebene Luftzahl λ einstellbar ist.
**dadurch gekennzeichnet, dass**
die Einrichtung (5) zur Messung des zweiten Messwerts eine Einrichtung zur Messung der Viskosität ist.

**10.** Vorrichtung nach Anspruch 9, wobei der Massenstrom der Luft in Abhängigkeit der Messwerte steuerbar ist.

**11.** Vorrichtung nach einem der Ansprüche 9 oder 10, wobei das Mittel zur Regelung des Massenstroms ein Gebläse (15) eine Luftklappe und/oder ein zweites Dosierventil aufweist.

**12.** Vorrichtung nach einem der Ansprüche 9 bis 11, wobei eine Einrichtung zur Erkennung der Stabilität einer im Brenner erzeugten Flamme vorgesehen ist, und wobei mittels der Datenverarbeitungseinrichtung (4) die Luftzahl λ in Abhängigkeit eines von der Einrichtung gemessenen vierten Messwerts regelbar ist.

**13.** Vorrichtung nach einem der Ansprüche 9 bis 12, wobei eine Einrichtung zur Messung der Leistung des Brenners (1ε) vorgesehen ist und wobei mittels der Datenverarbeitungseinrichtung (4) die Luftzahl λ in Abhängigkeit eines von der Einrichtung gemessenen fünften Messwerts regelbar ist.

**14.** Vorrichtung nach einem der Ansprüche 9 bis 13, wobei eine Einrichtung zur Messung des in den Abgasen enthaltenen Schadstoffgehalts vorgesehen ist, und wobei mittels der Datenverarbeitungseinrichtung (4) die Luftzahl λ in Abhängigkeit eines von der Einrichtung gemessenen sechsten Messwerts so regelbar ist, dass der bei der Verbrennung gebildete Schadstoffgehalt minimal ist.

**Claims**

**1.** Method for setting the air/fuel ratio λ of a fuel/air mixture made from a gaseous fuel and air for operating a burner (18), wherein

a) the mass flow of the fuel is determined as a first measured value,
b) a value for determination of the Wobbe index of the fuel is determined as a second measured value,
c) a mass flow of the air is determined as a third measured value, and
d) the mass flow of the air and/or the fuel is controlled in dependence on at least two of the measured values so that a specified air/fuel ratio λ of the fuel/air mixture is set,
**characterized in that**

the viscosity of the fuel is determined as the second measured value.

**2.** Method as defined in claim 1, wherein the control of the mass flow of the air takes place with step d in dependence on the measured values.

**3.** Method as defined in one of the preceding claims, wherein the measured values are sent to a data processing device (4), are processed in accordance with a specified algorithm, and wherein the mass flow of the fuel is regulated with a first dosing valve (9, 38) connected in the fuel flow by the data processing device (4).

**4.** Method as defined in claim 3, wherein the mass flow of the air is controlled by a blower (15), an air valve and/or a second dosing valve.

**5.** Method as defined in one of the preceding claims, wherein the air/fuel ratio $\lambda$ is regulated in dependence on the stability of a flame generated in the burner (18).

**6.** Method as defined in one of the preceding claims, wherein the air/fuel ratio $\lambda$ is regulated in dependence on a specified heating power of the burner (18).

**7.** Method as defined in one of the preceding claims, wherein the air/fuel ratio $\lambda$ is regulated so that the emissions created during combustion are minimal.

**8.** Method as defined in one of the preceding claims, wherein a mass flow of the fuel is regulated on the basis of the first and second measured values so that a specified heat value of the fuel fed to the burner (18) per time unit is kept essentially constant.

**9.** Device for performing the method as defined in one of the preceding claims, wherein a first mass flow sensor for determination of a first measured value, a device (5) for measuring a second measured value for determination of the Wobbe index, and a first dosing valve (9) are connected in a fuel feeder line (1), wherein a second mass flow sensor (13) for determination of a third measured value is connected in an air feeder line (12, 28), wherein means (15) for controlling the mass flow of the air is provided, wherein a data processing device (4) is provided for regulation of the mass flow of the fuel by the first dosing valve (9), wherein the mass flow of the fuel can be regulated in dependence on the first and second measured values so that a specified heat value of the fuel fed to the burner (18) per time unit is kept essentially constant, and wherein the mass flow of the air can be controlled by the data processing device (4) in dependence on at least two of the measured values so that a specified air/fuel ratio $\lambda$ can be set, **characterized in that** the device (5) for measuring the second measured value is a device for measuring the viscosity.

**10.** Device as defined in claim 9, wherein the mass flow of the air can be controlled in dependence on the measured values.

**11.** Device as defined in claim 9 or 10, wherein the means of regulating the mass flow is equipped with a blower (15), an air valve and/or a second dosing valve.

**12.** Device as defined in one of the claims 9 to 11, wherein a device for recognition of the stability of a flame generated in the burner is provided, and wherein the air/fuel ratio $\lambda$ can be regulated by the data processing device (4) in dependence on a fourth measured value measured by the device.

**13.** Device as defined in one of the claims 9 to 12, wherein a device for measuring the power of the burner (18) is provided, and wherein the air/fuel ratio $\lambda$ can be regulated by the data processing device (4) in dependence on a fifth measured value measured by the device.

**14.** Device as defined in one of the claims 9 to 13, wherein a device for measuring the pollution content of the emission is provided, and wherein the air/fuel ratio $\lambda$ can be regulated by the data processing device (4) in dependence on a sixth measured value measured by the device so that the pollution content created during combustion is minimal.

**Revendications**

**1.** Procédé de réglage du coefficient d'air $\lambda$ d'un mélange air/combustible composé d'un combustible gazeux et d'air destiné au fonctionnement d'un brûleur (18), où

a) le débit massique du combustible est déterminé comme première valeur mesurée,
b) une valeur permettant de calculer l'indice de Wobbe du combustible est déterminée comme deuxième valeur mesurée,
c) un débit massique de l'air est déterminé comme troisième valeur mesurée, et
d) le débit massique de l'air et/ou du combustible est commandé en fonction d'au moins deux des valeurs mesurées de manière à régler un coefficient d'air $\lambda$ prédéfini du mélange air/combustible,

**caractérisé en ce que**
la viscosité du combustible est déterminée comme deuxième valeur mesurée.

2. Procédé selon la revendication 1, où la commande du débit massique de l'air est effectuée à l'étape d) en fonction des valeurs mesurées.

3. Procédé selon l'une des revendications précédentes, où les valeurs mesurées sont transmises à un dispositif de traitement des données (4), traitées selon un algorithme prédéfini et le débit massique du combustible est réglé au moyen du dispositif de traitement des données (4) avec une première vanne de dosage (9, 38) connectée dans le flux du combustible.

4. Procédé selon la revendication 3, où le débit massique de l'air est commandé au moyen d'une soufflante (15), d'un volet d'air et/ou d'une deuxième vanne de dosage.

5. Procédé selon l'une des revendications précédentes, où le coefficient d'air λ est réglé en fonction de la stabilité d'une flamme générée dans le brûleur (18).

6. Procédé selon l'une des revendications précédentes, où le coefficient d'air λ est réglé en fonction d'une puissance calorifique prédéfinie du brûleur (18).

7. Procédé selon l'une des revendications précédentes, où le coefficient d'air λ est réglé de façon à ce que les émissions générées pendant la combustion soient minimales.

8. Procédé selon l'une des revendications précédentes, où un débit massique du combustible est réglé sur la base de la première et de la deuxième valeur mesurée de façon à ce qu'un pouvoir calorifique prédéfini du combustible véhiculé par unité de temps vers le brûleur (18) soit essentiellement maintenu constant.

9. Dispositif pour l'exécution du procédé selon l'une des revendications précédentes,
où sont montés, dans une conduite d'amenée du combustible (1), un premier capteur de débit massique pour la détermination d'une première valeur mesurée, un équipement (5) de mesure d'une deuxième valeur mesurée servant à la détermination de l'indice de Wobbe et une première vanne de dosage (9),
où est monté, dans une conduite d'amenée d'air (12, 28), un deuxième capteur de débit massique (13) pour la détermination d'une troisième valeur mesurée,
où est prévu un moyen (15) de commande du débit massique de l'air,

où est prévu un dispositif de traitement des données (4) pour la régulation du débit massique du combustible au moyen de la première vanne de dosage (9), le débit massique du combustible étant réglable en fonction de la première et de la deuxième valeur mesurée de façon à ce qu'un pouvoir calorifique prédéfini du combustible véhiculé par unité de temps vers le brûleur (18) soit essentiellement maintenu constant, et
où, au moyen du dispositif de traitement des données (4), le débit massique de l'air peut être commandé en fonction d'au moins deux des valeurs mesurées de façon à ce qu'un coefficient d'air λ prédéfini soit réglable,
**caractérisé en ce que**
l'équipement (5) destiné à la mesure de la deuxième valeur mesurée est un équipement destiné à la mesure de la viscosité.

10. Dispositif selon la revendication 9, où le débit massique de l'air peut être commandé en fonction des valeurs mesurées.

11. Dispositif selon l'une des revendications 9 ou 10, où le moyen destiné à la régulation du débit massique présente une soufflante (15), un volet d'air et/ou une deuxième vanne de dosage.

12. Dispositif selon l'une des revendications 9 à 11, où un équipement est prévu pour la détection de la stabilité d'une flamme générée dans le brûleur et où, au moyen du dispositif de traitement des données (4), le coefficient d'air λ peut être réglé en fonction d'une quatrième valeur mesurée par l'équipement.

13. Dispositif selon l'une des revendications 9 à 12, où un équipement de mesure de la puissance du brûleur (18) est prévu et où, au moyen du dispositif de traitement des données (4), le coefficient d'air λ peut être réglé en fonction d'une cinquième valeur mesurée par l'équipement.

14. Dispositif selon l'une des revendications 9 à 13, où est prévu un équipement de mesure de la teneur en polluants contenus dans les gaz d'échappement et où, au moyen du dispositif de traitement des données (4), le coefficient d'air λ peut être réglé en fonction d'une sixième valeur mesurée par l'équipement de façon à ce que la teneur en polluants formée lors de la combustion soit minimale.

Fig. 1

Fig. 2

Fig. 3

EP 1 370 806 B1

Gas

Luft

6

13

23

22

24

Fig. 4a

Fig. 4b

Fig. 4c

Steuer– und
Regelelektronik

Steuer– und
Regelelektronik

5

40

41

Mikro-
Pumpe

43

Δp / Pa
T / K

42

1

— — Gas — →

Fig. 5

5

44

43

Δp / Pa
T / K

40

42

1

— — Gas · →

Fig. 6

5

40    41    46    45    47    43

Pumpe

Δp / Pa
T / K

2a

42

1

— — Gas — →

Fig. 7

**EP 1 370 806 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2928739 B1
- WO 2000065280 A
- DE 19918901 C1
- DE 4336174
- US 5486107 A
- US 5401162 A
- EP 0819855 A1
- DE 2928739